# FASCICULE DE BREVET EUROPEEN

(11) **EP 1 147 698 B1**
(45) Date de publication et mention de la délivrance du brevet: **13.04.2005**
(21) Numéro de dépôt: 01440111.1
(22) Date de dépôt: 18.04.2001
(51) Int. Cl.: A01B 33/14

(54) **Machine de travail du sol**
Bodenbearbeitungsgeräte
Soil working machine

(30) Priorité: 20.04.2000 FR 0005270
(43) Date de publication de la demande: 24.10.2001
(73) Titulaire: KUHN S.A., 67706 Saverne Cedex (FR)
(72) Inventeur: Wagner, Pascal, 57980 Diebling (FR); Seemann, Michel, 57370 Phalsbourg (FR)

(56) Documents cités:
- EP-A- 0 129 047
- EP-A- 0 178 999
- EP-A- 0 715 032
- PATENT ABSTRACTS OF JAPAN vol. 013, no. 111 (C-577), 16 mars 1989 (1989-03-16) & JP 63 287404 A (MATSUYAMA PLOW MFG CO LTD), 24 novembre 1988 (1988-11-24)
- PATENT ABSTRACTS OF JAPAN vol. 1999, no. 09, 30 juillet 1999 (1999-07-30) & JP 11 103602 A (MITSUBISHI AGRICULT MACH CO LTD), 20 avril 1999 (1999-04-20)

## Description

La présente invention se rapporte à une machine de travail du sol comportant
- un châssis,
- un rotor, lié audit châssis, entraîné en rotation lors du travail autour d'un axe, sensiblement horizontal, dirigé transversalement à une direction d'avance de ladite machine,
- au moins un support lié audit rotor,
- au moins un outil lié de manière amovible audit support respectif, et
- au moins un premier moyen d'arrêt limitant un déplacement dudit outil, suivant son axe longitudinal, par rapport audit support respectif,
au moins un desdits premiers moyens d'arrêt comportant un élément élastiquement déformable.

Une telle machine de travail du sol est déjà connue de l'homme du métier. En effet, la demande de brevet **EP 0 715 032** décrit un dispositif de montage d'outils pour un rotor d'une machine destinée à couper le sol. Cette machine connue comporte un châssis et un rotor entraîné en rotation autour d'un axe horizontal dirigé transversalement à une direction d'avance de la machine. Ledit rotor comporte plusieurs disques disposés, de manière sensiblement régulière, sur la surface extérieure dudit rotor. Chaque disque supporte au moins un porte-outil, le porte-outil est fixé sur le disque au moyen de deux vis. Dans chaque porte-outil est logé un outil respectif qui est maintenu au moyen d'une goupille élastique. Chaque outil comporte une tige dans laquelle est ménagé un orifice, ce dernier est destiné à recevoir ladite goupille. Ladite goupille élastique constitue ainsi un premier moyen d'arrêt interdisant une translation dudit outil par rapport audit porte-outil.

Lors du travail, le rotor est entraîné en rotation autour de son axe longitudinal, et les outils de forme oblongue viennent couper le sol jusqu'à une profondeur préétablie. Le sol exerce ainsi, sur les outils de travail du sol, des efforts s'opposant au sens de rotation desdits outils de travail du sol. L'effort crée par le sol sur un outil de travail du sol est transmis audit châssis de la machine au travers des différentes pièces en contact les unes avec les autres. L'effort crée est ainsi transmis de l'outil au porte-outil par l'intermédiaire de ladite tige. L'effort crée passe ensuite du porte-outil au disque au moyen des vis de fixation. Puis, ils transitent du disque audit rotor au travers d'une liaison par soudure.

Dans la pratique, chaque pièce subissant des contraintes mécaniques est dimensionnée de façon à résister aux efforts maximums. Ce dimensionnement entraîne une augmentation de poids de ladite machine de travail du sol. Ainsi par exemple, les vis de fixation du porte-outil sont dimensionnées afin de pouvoir supporter les efforts subis par l'outil de travail du sol.

De plus, un tel type de liaison nécessite un contrôle fréquent du serrage des vis de fixation afin de prévenir toute rupture.

Le but de la présente invention consiste à remédier à ces inconvénients de l'état de la technique en proposant un montage permettant un transfert efficace et direct des efforts de l'outil vers ledit châssis.

A cet effet, la machine de travail du sol de la présente invention se caractérise en ce que le support est soudé sur ledit rotor et que le déplacement longitudinal de l'outil, suivant un premier sens est limité par un deuxième moyen d'arrêt correspondant à une mise en butée dudit outil contre ledit rotor. De ce fait, les efforts subis par l'outil sont directement transmis au rotor de ladite machine sans passer par des pièces intermédiaires, d'où une réduction du poids et donc du prix de ladite machine de travail du sol. De plus, le support de l'outil étant soudé sur le tube dudit rotor, un contrôle fréquent de cette liaison n'est plus nécessaire.

D'autres caractéristiques de l'invention apparaîtront dans les sous-revendications et dans la description suivante d'exemples de réalisation non limitatifs de l'invention représentés sur les dessins annexés sur lesquels :
- la **figure 1** représente une vue latérale d'une machine de travail du sol, conforme à l'invention, en position de travail,
- la **figure 2** représente, vue suivant la flèche I, la machine de la figure 1,
- la **figure 3** représente, à une autre échelle, un tronçon du rotor de la machine de travail du sol visible sur la figure 2,
- la **figure 4** représente, vu suivant la flèche II, un exemple de réalisation de la liaison entre un outil et le rotor de la figure 3,
- la **figure 5** représente, vu suivant la flèche II, un exemple de réalisation d'un outil équipant le rotor de la figure 4.

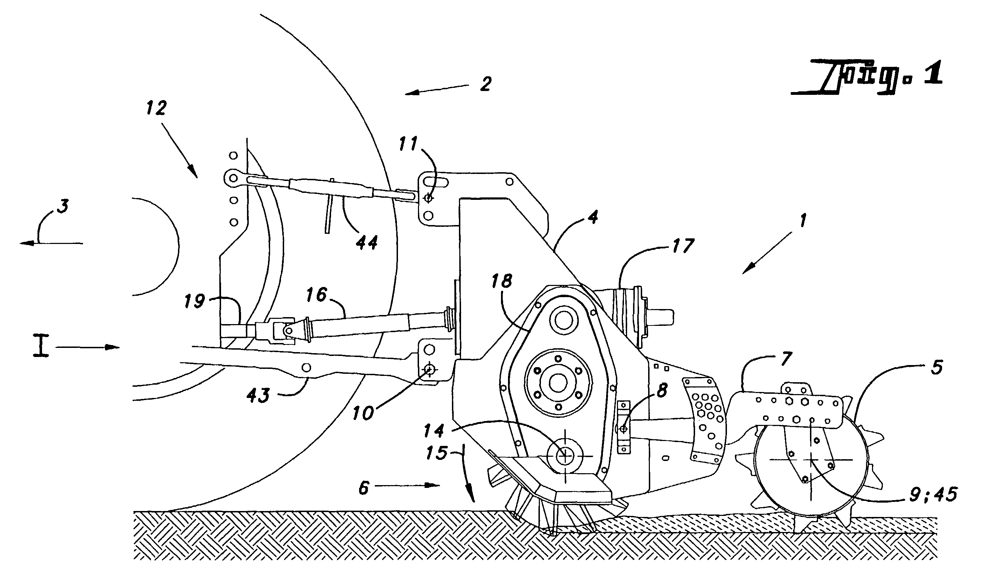

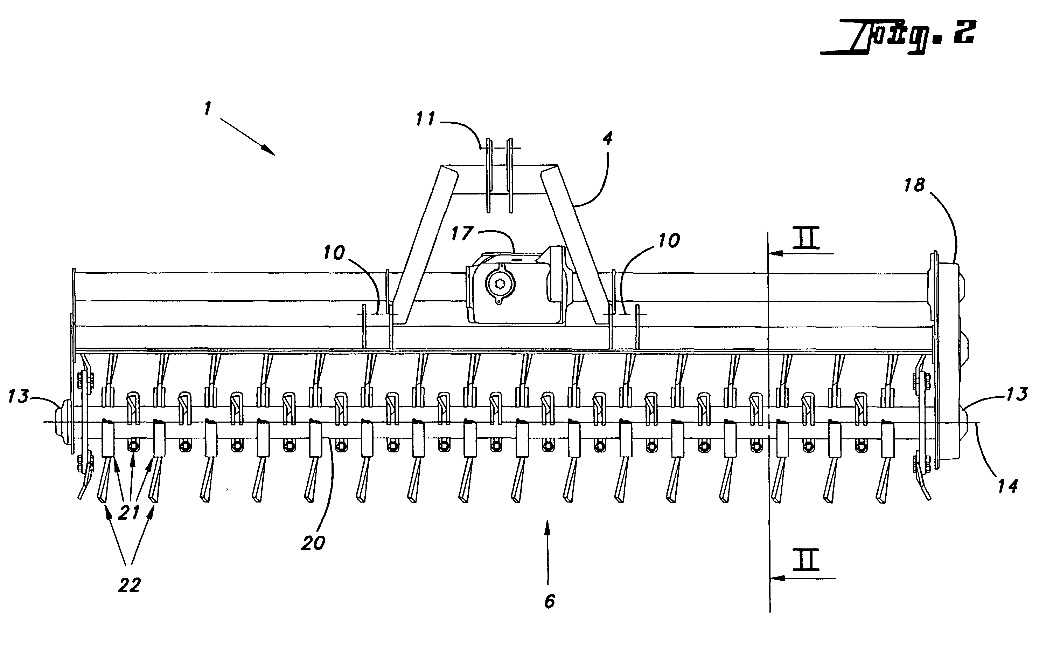

Les figures 1 et 2 montrent une machine de travail du sol, conforme à la présente invention, réalisée sous la forme d'une fraise rotative (1). Celle-ci est attelée, sur la figure 1, à un véhicule tracteur (2) partiellement représenté. Lors du travail, comme visible sur la figure 1, ladite fraise rotative (1) est tirée par ledit véhicule tracteur (2) suivant une direction d'avance (3), et elle prépare une bande de terre en vue des travaux de semis. A cet effet, ladite fraise rotative (1) se compose, entre autres, d'un châssis (4) et d'un rotor (6) destiné à travailler ledit sol.

Ledit châssis (4) comporte notamment deux points d'attelage inférieurs (10) et un point d'attelage supérieur (11). Lesdits points d'attelage (10, 11) sont prévus, d'une manière connue de l'homme de l'art, pour l'accouplement de ladite fraise rotative (1) aux bras inférieurs (43) et au bras supérieur (44) de l'attelage trois points (12) dudit véhicule tracteur (2). Lors du travail, ledit châssis (4) repose, au moins partiellement, sur le sol au moyen d'un rouleau (5).

Ledit rouleau (5), agencé derrière ledit rotor (6) compte tenu de la direction d'avance (3), est lié audit châssis (4) au moyen de deux bras (7). Les extrémités arrières desdits bras (7) guident en rotation ledit rouleau (5) autour d'un axe (9) sensiblement horizontal et transversal à la direction d'avance (3). Lors du travail, ledit rouleau (5) peut ainsi donc rouler sur le sol en pivotant autour de son axe longitudinal (45) sensiblement confondu avec ledit axe (9). L'extrémité avant de chaque bras (7) est, quant à lui, respectivement liée à un coté latéral dudit châssis (4) au moyen d'une articulation (8). L'axe de chaque articulation (8) est avantageusement sensiblement parallèle à l'axe longitudinal (45). D'une manière connue de l'homme de l'art, l'orientation desdits bras (7) autour des articulations (8) est réglable. Ainsi, ledit rouleau (5) permet de déterminer la profondeur de travail du rotor (6) tout en participant activement à la préparation de la bande de terre.

Ledit rotor (6) est lié, à chacune de ces extrémités, audit châssis (4) au moyen d'une articulation respective (13) de telle façon que l'axe longitudinal (14) du rotor (6) soit sensiblement parallèle à l'axe longitudinal (45) du rouleau (5). Lors du travail, ledit rotor (6) est entraîné en rotation, autour de son axe longitudinal (14), dans le sens anti-horaire (15) compte tenu de la figure 1. A cet effet, ladite fraise rotative (1) comporte également des éléments de transmission (16, 17, 18) qui relient, d'une manière connue de l'homme de l'art, ledit rotor (6) à une prise de force (19) du véhicule tracteur (2). Ces éléments de transmission (16, 17, 18) se composent notamment d'un arbre de transmission à joints universels (16) qui transmet un mouvement de la prise de force (19) à un carter central (17). Ledit carter central (17) entraîne, à son tour, le rotor (6) par l'intermédiaire d'un carter latéral (18).

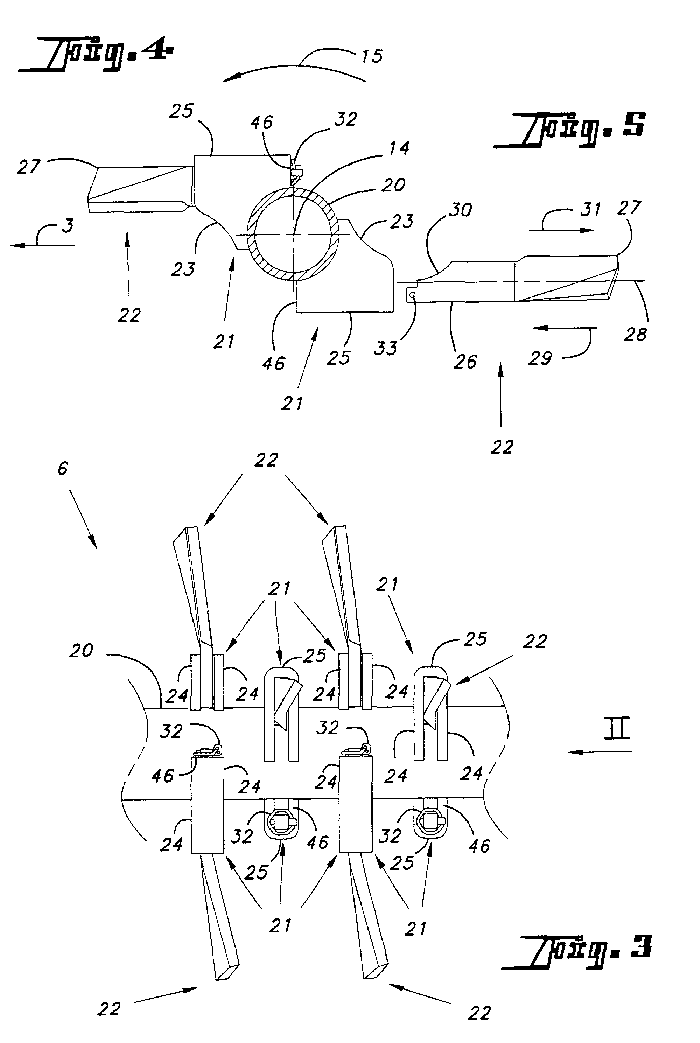

Dans l'exemple de réalisation d'un rotor (6) représenté sur les figures 2 à 4, ledit rotor (6) est constitué d'un tube (20) sur lequel plusieurs supports (21) sont fixés. Ledit rotor (6) comporte également une pluralité d'outils (22) liés respectivement à un support (21) correspondant. Lesdits supports (21) sont regroupés par paires, et chaque paire de supports (21) s'étend dans un plan respectif sensiblement perpendiculaire à l'axe longitudinal (14) du rotor (6). Au sein d'une même paire, les deux supports (21) sont disposés, de manière sensiblement symétrique, autour dudit axe longitudinal (14). Lesdits plans respectifs sont, quant à eux, régulièrement espacés le long du tube (20), et chaque paire de supports (21) est décalée, comme visible sur les figures 2 et 3, des paires de support (21) immédiatement voisines d'une rotation de 90 degrés. De ce fait, à chaque quart de tour du rotor (6), un quart des outils (22) viennent simultanément frapper le sol. Selon un autre exemple de réalisation, visible sur la figure 1, le décalage angulaire entre deux paires de supports (21) immédiatement voisines est avantageusement de l'ordre de 100 degrés. Ainsi, lesdits supports (21) décrivent, le long du tube (20), une double hélice. Il en découle un travail moins saccadé, car lors de la rotation du tube (20), lesdits outils (22) frappent le sol pratiquement l'un après l'autre. Dans cet exemple de réalisation, les outils (22) ne sont pas orientés radialement audit axe longitudinal (14) du rotor (6). En effet, comme visible sur la figure 4, l'axe longitudinal (28) de chaque outil (22) est incliné vers l'avant en tenant compte du sens de rotation (15) du rotor (6). Lors du travail, une telle orientation donne avantageusement à l'outil (22) un effet de pioche.

Dans l'exemple de réalisation d'un rotor (6) représenté sur les figures 2 à 4, chaque support (21) est réalisé sous la forme d'un fourreau (23). Chaque fourreau (23) a la forme d'un "U" dont les flancs (24) s'étendent respectivement dans un plan sensiblement orthogonal à l'axe longitudinal (14). L'extrémité desdits flancs (24) est soudée sur ledit tube (20), de sorte que l'ouverture du "U" soit dirigée vers ledit axe longitudinal (14). Par conséquent, les deux flancs (24) et le fond (25) de chaque fourreau (23) ainsi que le tube (20) forment un logement dans lequel se glisse un outil (22) respectif. A cet effet, chaque outil (22) comporte une partie de liaison (26), de forme sensiblement complémentaire à la forme dudit logement, permettant de lier ledit outil (22) audit rotor (6), et une partie active (27) travaillant le sol. Le maintien de l'orientation de chaque outil (22) par rapport au rotor (6) est donc principalement assuré par la partie de liaison (26) de l'outil (22) ainsi que par les flancs (24) et le fond (25) du fourreau (23) correspondant. Le maintien de l'outil (22) dans le fourreau (23) est réalisé, quant à lui, à l'aide de moyens d'arrêt.

Lors du montage, l'outil (22) est glissé dans un fourreau (23) correspondant par un mouvement de translation, dans le sens de montage (29), suivant l'axe longitudinal (28) dudit outil (22). Dans ce premier exemple de réalisation, le sens de montage (29), visible sur la figure 5, est opposé au sens de rotation (15) du rotor (6). Le déplacement de l'outil (22), dans le sens de montage (29), par rapport au fourreau (23) correspondant est limité par un deuxième moyen d'arrêt. Dans l'exemple de réalisation représenté sur la figure 4, ce deuxième moyen d'arrêt est réalisé par la mise en butée dudit outil (22) contre le tube (20). A cet effet, comme visible sur la figure 5, le contour de la partie de liaison (26) dudit outil (22) comporte une portion (30) ayant une forme sensiblement complémentaire à la forme du tube (20).

Pour éviter tout démontage intempestif, il est également prévu un premier moyen d'arrêt qui interdit le déplacement de l'outil (22), le long de son axe longitudinal (28), suivant un sens de démontage (31) opposé au sens de montage (29).

Dans l'exemple de réalisation représenté sur les figures 2 à 5, le premier moyen d'arrêt comporte un élément élastiquement déformable réalisé sous la forme d'une goupille automatique (32) enfilée dans un trou (33) traversant la partie de liaison (26) de l'outil correspondant (22). Une fois mise en place, ladite goupille automatique (32) empêche, en venant en butée contre la face arrière (46) du fourreau (23) compte tenu du sens de rotation (15), la désolidarisation de l'outil (22) vis à vis de son support (21). Toutefois, dans le but de faciliter et d'accélérer les opérations de montage/démontage, l'utilisateur peut avantageusement manoeuvrer ladite goupille automatique (32) sans outil. Ainsi, l'utilisateur peut aisément mettre en place, ou retirer, ladite goupille automatique (32) en verrouillant, ou déverrouillant, celle-ci à la main. Par contre dans un souci de sécurité, lorsque l'outil (22) est glissé dans son fourreau (23), l'axe du trou (33) est avantageusement sensiblement parallèle à l'axe de rotation (14) du rotor (6). Avec une telle disposition, la force centrifuge engendrée par la rotation du rotor (6) n'a ainsi aucune tendance à expulser une goupille automatique (32) qui se serait accidentellement ouverte lors du travail. Toujours dans un souci de sécurité, les dimensions de la goupille automatique (32) sont définies de telle façon que cette dernière soit en permanence masquée derrière, compte tenu du sens de rotation (15), son fourreau correspondant (23). Comme visible sur la figure 3, lesdites goupilles automatiques (32) sont, par conséquent, parfaitement protégées d'un contact direct avec la terre ou avec des débris végétaux se trouvant dans le sol.

Les opérations de changement d'outils (22) sur la fraise rotative (1) de la présente invention se résume donc à ouvrir, à la main, la goupille automatique (32) et la sortir du trou (33), puis dégager l'outil usagé du fourreau (23) en le tirant suivant le sens de démontage (31) et engager un outil neuf en le poussant suivant le sens de montage (29), et finalement enfiler la goupille automatique (32) dans le trou (33) et la verrouiller à nouveau.

Le rotor (6) et la fraise rotative (1) qui viennent d'être décrits, ne sont qu'un exemple de réalisation et d'utilisation qui ne saurait en aucun cas limiter le domaine de protection défini par les revendications suivantes.

## Revendications

1. Machine de travail du sol comportant :
- un châssis (4),
- un rotor (6), lié audit châssis (4), entraîné en rotation lors du travail autour d'un axe (14), sensiblement horizontal, dirigé transversalement à une direction d'avance (3) de ladite machine,
- au moins un support (21) lié auoit rotor (6),
- au moins un outil (22) lié de manière amovible audit support respectif (21), et
- au moins un premier moyen d'arrêt limitant un déplacement dudit outil (22), suivant son axe longitudinal (28), par rapport audit support respectif (21),
au moins un desdits premiers moyens d'arrêt comportant un élément élastiquement déformable,
***caractérisée par le fait que*** ledit support (21) est soudé sur ledit rotor (6) et que ledit déplacement longitudinal de l'outil (22), suivant un premier sens est limité par un deuxième moyen d'arrêt correspondant à une mise en butée dudit outil (22) contre ledit rotor (6).

2. Machine de travail du sol selon la revendication 1, ***caractérisée par le fait que*** chaque moyen d'arrêt limite, uniquement dans un sens, ledit déplacement longitudinal de l'outil (22) par rapport audit support respectif (21).

3. Machine de travail du sol selon la revendication 1 ou 2, ***caractérisée par le fait que*** ledit premier sens de déplacement correspond au sens de montage (29) dudit outil (22) dans ledit support respectif (21).

4. Machine de travail du sol selon l'une quelconque des revendications 1 à 3, ***caractérisée par le fait que*** ledit déplacement longitudinal de l'outil (22), suivant un deuxième sens qui est opposé du premier sens, est limité par un premier moyen d'arrêt

5. Machine de travail du sol selon la revendication 4, ***caractérisée par le fait que*** ledit deuxième sens de déplacement correspond au sens de démontage (31) dudit outil (22) de son support respectif (21).

6. Machine de travail du sol selon la revendication 5, ***caractérisée par le fait que*** ledit premier moyen d'arrêt correspond à une mise en butée de l'élément élastiquement déformable contre ledit support respectif (21).

7. Machine de travail du sol selon l'une quelconque des revendications 1 à 6, ***caractérisée par le fait que*** l'élément élastiquement déformable est une goupille automatique (32).

8. Machine de travail du sol selon la revendication 7, ***caractérisée par le fait que*** ladite goupille automatique (32) est déformable sans outil.

9. Machine de travail du sol selon l'une quelconque des revendications 1 à 8, ***caractérisée par le fait que*** ledit outil (22) comporte une partie active (27) et une partie de liaison (26).

10. Machine de travail du sol selon la revendication 9, ***caractérisée par le fait qu'au*** moins une portion (30) du contour de ladite partie de liaison (26) a une forme complémentaire de la forme extérieure dudit rotor (6).

11. Machine de travail du sol selon la revendication 10 ou 9, ***caractérisée par le fait que*** ladite partie de liaison (26) comporte un trou (33) au travers duquel passe ladite goupille automatique (32).

12. Machine de travail du sol selon la revendication 11, ***caractérisée par le fait que*** lorsque ledit outil (22) est monté dans le support respectif (21), ledit trou (33) a un axe sensiblement parallèle à l'axe (14) dudit rotor (6).

## Patentansprüche

1. Bodenbearbeitungsmaschine, die
- einen Rahmen (4),
- einen mit dem Rahmen (4) verbundenen Rotor (6), der im Betrieb um eine im Wesentlichen horizontale, quer zu einer Vorschubrichtung (3) der Maschine ausgerichtete Achse (14) drehangetrieben wird,
- mindestens einen mit dem Rotor (6) verbundenen Träger (21),
- mindestens ein Werkzeug (22), das lösbar mit dem jeweiligen Träger (21) verbunden ist,
- mindestens ein erstes Haltemittel, das eine Bewegung des Werkzeugs (22) entlang seiner Längsachse (28) bezüglich des jeweiligen Trägers (21) begrenzt, und
- wobei mindestens eines der ersten Haltemittel ein elastisch verformbares Element aufweist,
umfasst, ***dadurch gekennzeichnet,* dass** der Träger (21) mit dem Rotor (6) verschweißt ist und dass die Längsbewegung des Werkzeugs (22) entlang einer ersten Richtung durch ein zweites Haltemittel begrenzt wird, das einem Anstoßen des Werkzeugs (22) an den Rotor (6) entspricht.

2. Bodenbearbeitungsmaschine nach Anspruch 1, ***dadurch gekennzeichnet,* dass** jedes Haltemittel die Längsbewegung des Werkzeugs (22) bezüglich des jeweiligen Trägers (21) nur in einer Richtung begrenzt.

3. Bodenbearbeitungsmaschine nach Anspruch 1 oder 2, ***dadurch gekennzeichnet,* dass** die erste Bewegungsrichtung der Richtung (29) der Montage des Werkzeugs (22) in dem jeweiligen Träger (21) entspricht.

4. Bodenbearbeitungsmaschine nach irgend einem der Ansprüche 1 bis 3, ***dadurch gekennzeichnet,* dass** die Längsbewegung des Werkzeugs (22) in einer zweiten Richtung, die der ersten Richtung entgegengesetzt ist, durch ein erstes Haltemittel begrenzt wird.

5. Bodenbearbeitungsmaschine nach Anspruch 4, ***dadurch gekennzeichnet,* dass** die zweite Bewegungsrichtung der Richtung (31) des Abmontierens des Werkzeugs (22) von seinem jeweiligen Träger (21) entspricht.

6. Bodenbearbeitungsmaschine nach Anspruch 5, ***dadurch gekennzeichnet,* dass** das erste Haltemittel einem Anstoßen des elastisch verformbaren Elements an den jeweiligen Träger (21) entspricht.

7. Bodenbearbeitungsmaschine nach irgend einem der Ansprüche 1 bis 6, ***dadurch gekennzeichnet,* dass** das elastisch verformbare Element ein automatischer Stift (32) ist.

8. Bodenbearbeitungsmaschine nach Anspruch 7, ***dadurch gekennzeichnet,* dass** der automatische Stift (32) ohne Werkzeug verformbar ist.

9. Bodenbearbeitungsmaschine nach irgend einem der Ansprüche 1 bis 8, ***dadurch gekennzeichnet,* dass** das Werkzeug (22) einen aktiven Teil (27) und einen Verbindungsteil (26) aufweist.

10. Bodenbearbeitungsmaschine nach Anspruch 9, ***dadurch gekennzeichnet,* dass** mindestens ein Teil (30) der Kontur des Verbindungsteils (26) eine zur Außenform des Rotors (6) komplementäre Form aufweist.

11. Bodenbearbeitungsmaschine nach Anspruch 9 oder 10, ***dadurch gekennzeichnet,* dass** der Verbindungsteil (26) ein Loch (33) aufweist, durch das sich der automatische Stift (32) erstreckt.

12. Bodenbearbeitungsmaschine nach Anspruch 11, ***dadurch gekennzeichnet,* dass** das Loch (33) eine im Wesentlichen parallel zur Achse (14) des Rotors (6) verlaufende Achse aufweist, wenn das Werkzeug (22) im jeweiligen Träger (21) montiert ist.

## Claims

1. Soil working machine comprising:
- a frame (4),
- a rotor (6), connected to the said frame (4), driven in rotation during work about a substantially horizontal shaft (14), directed transversely to a direction of travel (3) of the said machine,
- at least one support (21) connected to the said rotor (6),
- at least one tool (22) connected removably to the said respective support (21),
- at least one first stopping means limiting a movement of the said tool (22), along its longitudinal axis (28), relative to the said respective support (21), and
- at least one of the said first stopping means comprises an elastically deformable element,
***characterized in* that** the said support (21) is welded onto the said rotor (6) and that the said longitudinal movement of the tool (22), in a first direction, is limited by a second stopping means corresponding to the said tool (22) abutting on the said rotor (6).

2. Soil working machine according to Claim 1, ***characterized in* that** each stopping means limits, in one direction only, the said longitudinal movement of the tool (22) relative to the said respective support (21 ).

3. Soil working machine according to Claim 1 or 2, ***characterized in* that** the said first direction of movement corresponds to the direction of assembly (29) of the said tool (22) into the said respective support (21).

4. Soil working machine according to any one of Claims 1 to 3, ***characterized in* that** the said longitudinal movement of the tool (22) in a second direction opposite to the first direction is limited by a first stopping means.

5. Soil working machine according to Claim 4, ***characterized in* that** the said second direction of movement corresponds to the direction of removal (31) of the said tool (22) from its respective support (21).

6. Soil working machine according to Claim 5, ***characterized in* that** the said first stopping means corresponds to the elastically deformable element abutting on the said respective support (21).

7. Soil working machine according to any one of Claims 1 to 6, ***characterized in* that** the elastically deformable element is an automatic pin (32).

8. Soil working machine according to Claim 7, ***characterized in* that** the said automatic pin (32) is deformable without tools.

9. Soil working machine according to any one of Claims 1 to 8, ***characterized in* that** the said tool (22) comprises an active part (27) and a connection part (26).

10. Soil working machine according to Claim 9, ***characterized in* that** at least one portion (30) of the outline of the said connection part (26) has a shape that complements the external shape of the said rotor (6).

11. Soil working machine according to Claim 9 or 10, ***characterized in* that** the said connection part (26) comprises a hole (33) through which the said automatic pin (32) passes.

12. Soil working machine according to Claim 11, ***characterized in* that** when the said tool (22) is fitted into the respective support (21), the said hole (33) has an axis substantially parallel to the axis (14) of the said rotor (6).
